# EUROPÄISCHE PATENTSCHRIFT

(11) **EP 0 805 106 B1**
(45) Veröffentlichungstag und Bekanntmachung des Hinweises auf die Patenterteilung: **13.08.2003**
(21) Anmeldenummer: 97106852.3
(22) Anmeldetag: 25.04.1997
(51) Int. Cl.: B64C 21/02, B64C 21/06

(54) **Absauggeneratorsystem eines Flugzeuges für die Laminarhaltung der Grenzschicht**
Suction generating device to control the boundary layer flow of an aircraft
Générateur d'aspiration de la couche limite d'un avion

(30) Priorität: 04.05.1996 DE 19617952
(43) Veröffentlichungstag der Anmeldung: 05.11.1997
(73) Patentinhaber: Airbus Deutschland GmbH, 21129 Hamburg (DE)
(72) Erfinder: Breit, Hubert, Dipl.-Ing., 21614 Buxtehude (DE)
(74) Vertreter: Hansmann, Dierk, Dipl.-Ing.

(56) Entgegenhaltungen:
- DE-A- 3 621 783
- DE-A- 4 128 078
- DE-C- 736 114
- US-A- 2 585 676
- US-A- 3 149 804
- US-A- 4 666 104

## Beschreibung

Die Erfindung bezieht sich auf ein Absauggeneratorsystem eines Flugzeuges für die Laminarhaltung der Grenzschicht. Mit ihr wird unter Ausnutzung traditionell gebundener Druckluft-Energieressourcen die Absaugung der Grenzschichtströmung an den strömungskritischen Stellen der Außenhautstruktur des Flugzeuges betrieben.

Eine bekannte Vorgehensweise bei der Grenzschichtbeeinflußung an der Oberfläche des Strukturprofiles eines Flugzeuges beruht darauf, daß zum Absaugen der Grenzschichtströmung als Absauggeneratorantrieb bisher fremd angetriebene Kompressoren vorgesehen werden. Diese zusätzlich bereitgestellte Antriebsleistung bedeutet einen höheren Wartungsaufwand, der auch infolge der rotierenden Antriebsteile die Systemzuverlässigkeit ungünstig beeinflußt. Zudem wird durch den großen Gewichtsanteil der Kompressoren der Kraftstoffverbrauch des Flugzeuges angehoben.

Aus der DE-AS 1 280 057 ist außerdem bekannt, daß zur Absaugung eines Flugzeugtragflügels die luftstrombezogenen Verbindungsleitungen an eine Saugquelle im Inneren des Flugzeuges angeschlossen sind, wobei der Druckschrift keine näheren Angaben zur Funktion der Saugquelle zu entnehmen sind. Der genannten Druckschrift ist auch nirgends ein Hinweis zu entnehmen, der dazu führen könnte, die Absaugung der Grenzschichtströmung oberhalb der Tragflügeloberfläche mit einem Absauggeneratorsystem zu betreiben, daß sich unter Ausnutzung der traditionell gebundenen Druckluft-Energieressourcen eines Flugzeuges antreiben läßt.

Außerdem zeigt die DE 41 28 078 A1 ein Absauggeneratorsystem eines Flugzeuges für die Laminarhaltung der Grenzschicht mit einer Ejektorpumpe, die durch einen ihr zugeführten Druckluftstrom angetrieben wird, wobei der Druckluftstrom Triebwerkszapfluft ist. Die Ejektorpumpe benötigt ein Gebläse als Antrieb, der dafür sorgt, um die Absaugfunktion zum Absaugen der Grenzschicht zu realisieren. Falls ein Absauggeneratorsystem derart betrieben wird, sind anfallende Betriebskosten, die einen hohen Kraftstoffverbrauch einschließen, nicht zu vermeiden.

Die Tatsache, daß der Fachwelt die Verwendung von Lavaldüsen bei Absaugsystemen im Luftfahrtbereich, gemäß dem Oberbegriff des anspruchs 1, geläufig sind, wird darüber hinaus in der DR-PS 736 114 und in der US 31 49 804 gezeigt. Nach der DR-PS 736 114 wird die Lavaldüse direkt durch die vom Triebwerk ungeregelt zugeführte Zapfluft angetrieben. Die Lösung der US 31 49 804 verzichtet außerdem auf den strömungstechnischen Antrieb der Ejektorpumpe.

Weiterhin ist der Fachwelt die Tatsache geläufig, ein vom Antrieb eines Flugzeuges stammendes energiereiches Gas mittels einer Ejektorpumpe zum Absaugen der Grenzschicht von aerodynamischen Bauteilen zu verwenden. Dabei wird mittels der Abgasenergie der Antriebsmaschine unterhalb der abzusaugenden Profiloberfläche(n) ein Unterdruck erzeugt und aufrechterhalten, der dafür sorgt, um durch den Unterdruck die Absaugfunktion zum Absaugen der Grenzschicht zu realisieren. Beim Betreiben eines derartigen Absauggeneratorsystems werden Betriebskosten, die einen hohen Kraftstoffverbrauch einschließen, anfallen.

Allen letztgenannten Lösungen schlagen keine Maßnahme vor, nach der man die überschüssige Druckluft-Energie der Druckkammer (des Druckrumpfes) und die triebwerksbezogene Zapfluft eines Flugzeuges in Kombination (wahlweise und / oder in Abhängigkeit der Flughöhe) zum geregelten Antreiben einer Ejektorpumpe dazu nutzen würde, um die Absaugfunktion zum Absaugen der Grenzschicht zu verwirklichen.

Demzufolge liegt der Erfindung die Aufgabe zugrunde, ein gattungsgemäßes Absauggeneratorsystem eines Flugzeuges derart zu gestalten, daß sich mit ihr das Absauggeneratorsystem unter Ausnutzung der an Bord traditionell gebundenen Druckluft-Energieressourcen und ohne weitere zusätzliche Energiebereitstellung betreiben läßt, um mit ihm an den kritischen Stellen der Außenhautstruktur des Flugzeuges die Laminarhaltung der Grenzschicht durch Absaugung zu erreichen. Gleichzeitig soll mit ihr die Systemzuverlässigkeit verbessert und der Wartungsaufwand vermindert werden, wobei unter Einschränkung der Systemgewichtszunahme das Absauggeneratorsystem ein geringes Bauvolumen beanspruchen soll.

Diese Aufgabe wird durch die im Anspruch 1 angegebenen Maßnahmen gelöst. In den weiteren Unteransprüchen sind zweckmäßige Ausgestaltungen dieser Maßnahmen angegeben.

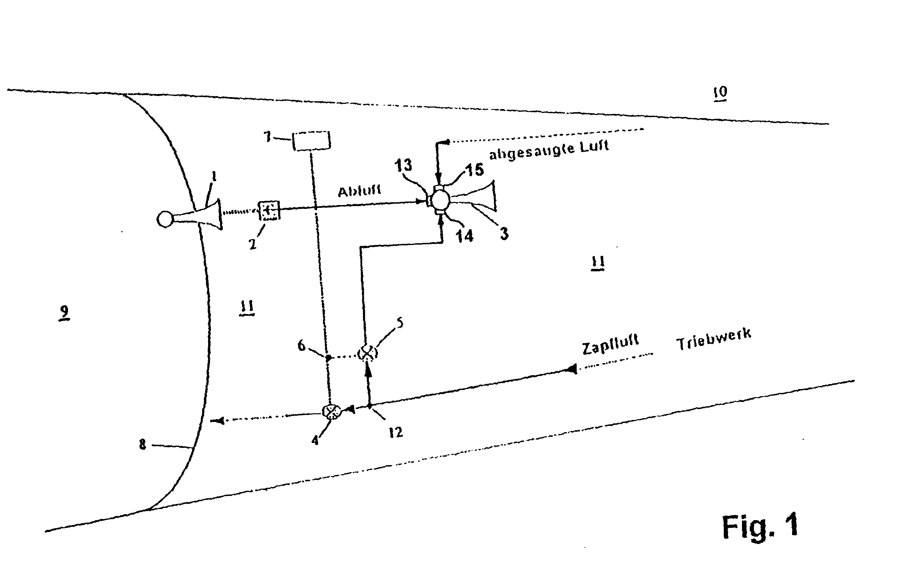

Die Erfindung ist anhand der Zeichnung in einem Ausführungsbeispiel näher beschrieben. Die Fig. 1 zeigt ein luftstrombezogenes Übersichtsschaltbild des Absauggeneratorsystems.

Das Absauggeneratorsystem besteht grundsätzlich aus: Ejektorpumpe(n) 3, Ausströmventil(en) 1, Rückschlagventil(en) 2, Absperrventilen 4, 5, die durch eine elektrische oder elektronische Steuereinheit 7 betätigt werden, und mehreren mittels Luftstromverbindungsleitungen realisierten luftstrombezogenen Verbindungen, mit denen die genannten Elemente luftstrombezogen verbunden sind. Die Luftstromverbindungsleitungen sind als Rohrleitung und / oder als -kanal ausgeführt.

Nach der Fig. 1 weist eine Minimalausführung des Absauggeneratorsystems wenigstens eine Ejektorpumpe 3 mit drei Eingängen 13, 14, 15 auf. Aus einem Ausströmventil 1, das beispielgemäß in der Öffnung der hinteren Druckkalotte (der Druckwand 8) der Druckkabine des Flugzeuges sitzt, strömt über ein mit ihm luftstrombezogen in Reihe geschaltetes Rückschlagventil 2 verdichtete und unter Druck stehende überschüssige Abluft, die infolge der bestehenden Druckdifferenz zwischen der (durch die Druckwand 8 getrennten) Druckkabine und dem angrenzenden nichtdruckbeaufschlagten Bereich 11 des Flugzeug-Innenbereiches abfließt, aus dem druckbeaufschlagten Bereich 9 des Druckrumpfes über eine dem ersten Eingang 13 der Ejektorpumpe 3 angeschlossene Luftstromverbindungsleitung ein. In einer weiteren Luftstromverbindungsleitung, die eine luftstrombezogenen Verzweigung 12 (Leitungsverzweigung) kreuzt, strömt unter Druck stehende Zapfluft, die wenigstens einem (nicht gezeigten) Triebwerk entnommen wird. Der Verzweigung 12 sind zwei Luftstromverbindungsleitungen abgezweigt. Am Ende jeder dieser Leitungen sitzt jeweils ein Absperrventil 4 oder 5, daß den betreffenden Druckluftstrom der (aufgeteilten) Zapfluft unterbricht oder freigibt. Dabei ist ein erstes Absperrventil 5 mittels einer Luftstromverbindungsleitung mit dem zweiten Eingang 14 der Ejektorpumpe 3 und ein zweites Absperrventil 4 mit einer (nicht gezeigten) Klimaeinheit des Flugzeuges verbunden.

Der dritte Eingang 15 der Ejektorpumpe 3 ist mit den strömungskritischen Stellen der Außenhautstruktur des Flugzeuges verbunden, an denen die Absaugung der (um)strömenden Grenzschicht oberhalb der Außenhaut des Flugzeuges erfolgen soll. Wenigstens eine Lavaldüse und ein Diffusor, der den Ausgang der Lavaldüse bildet, sind integraler Bestandteil der Ejektorpumpe 3.

Die beiden Absperrventile 4, 5 sind mittels einer Steuer- bzw. Signalleitung mit einer elektrischen Verzweigung 6 verbunden, die mittels einer weiteren Steuer- bzw. Signalleitung mit einer elektronischen / elektrischen Steuereinheit 7 in Verbindung steht. Sie werden (beispielsweise auf Druckknopfbetätigung oder automatisch) durch die Steuereinheit 7 wahlweise betätigt. Die Ansteuerung geschieht in Abhängigkeit der Flughöhe des Flugzeuges.

Bei einer geringen Flughöhe bis zu 6400 m (21000 ft) werden die beiden Absperrventile 4, 5 so geschaltet, daß das erste Absperrventil 5 geöffnet und das zweite Absperrventil 4 geschlossen ist. Die triebwerksbezogene Zapfluft strömt dem zweiten Eingang 14 der Ejektorpumpe 3 vollständig zu, da die Luftzufuhr zur Klimaeinheit durch das geschlossene zweite Absperrventil 4 unterbrochen (gesperrt) ist. Durch den Druckluftstrom der Zapfluft, die dem zweiten Eingang 14 der Ejektorpumpe 3 eintritt, wird die Ejektorpumpe 3 mechanisch angetrieben.

Bei einer Flughöhe über 6400 m (21000 ft) bis Reiseflughöhe werden die beiden Absperrventile 4, 5 so geschalten, daß das erste Absperrventil 5 geschlossen und das zweite Absperrventil 4 geöffnet ist. Die triebwerksbezogenen Zapfluft strömt der Klimaanlage vollständig zu, da die Luftzufuhr zum zweiten Eingang 14 der Ejektorpumpe 3 durch das geschlossene erste Absperrventil 5 unterbrochen (gesperrt) ist.

Die Klimaeinheit nimmt dann die ihr einströmende Zapfluft gemeinsam mit der ihr separat zugeleiteten verbrauchten Rezirkulationsluft des Druckrumpfes (beispielsweise aus dem Passagierbereich) auf, und führt (luftstrombezogen nicht dargestellt) klimatisch aufbereitete Rezirkulationsluft in den Druckrumpf zurück. Im Bereich dieser Flughöhen (über 6400m (21000 ft) bis Reiseflughöhe) wird die Ejektorpumpe 3 durch den ihr am ersten Eingang 13 der Ejektorpumpe 3 eintretenden Druckluftstrom der Abluft der Druckkabine des Flugzeuges, die infolge der - (in diesen Höhen bestehenden) Druckdifferenz zwischen dem druckbeaufschlagten Bereich 9 des Druckrumpfes und dem nichtdruckbeaufschlagen Bereich 11 ds Flugzeuginnenbereiches - über das Rückschlagventil 2 der Druckkabine abfließt, mechanisch angetrieben. Bei einem - die Ausnahme darstellenden - Betriebszustand, der durch ein nichtausreichendes Druckpotentials in der Druckkabine (im druckbeaufschlagten Bereich 9 des Druckrumpfes) charakterisiert ist, wird durch die Steuereinheit 7 (zusätzlich) das erste Absperrventil 5 geöffnet. Am zweiten Eingang 14 der Ejektorpumpe 3 tritt dann zusätzlich ein Teil des Druckluftstromes der triebwerksbezogenen Zapfluft ein, um die notwendige mechanische Antriebsleistung für den Betrieb der Ejektorpumpe 3 abzusichern. Der andere Teil des Druckluftstromes der triebwerkbezogenen Zapfluft wird - über das geöffnete zweite Absperrventil 4 - weiterhin der Klimaanlage zugeführt.

Danach werden der erste und der zweite Eingang 13, 14 der Ejektorpumpe 3 wahlweise oder gemeinsam mit einem getrennt zugeführtem Druckluftstrom gespeist, der die Ejektorpumpe 3 pneumatisch antreibt. Dabei wird die dem ersten und / oder zweiten Eingang 13, 14 der Ejektorpumpe 3 zugeführte verdichtete Luft in der vorgenannten Lavaldüse auf einen Druck, der unterhalb des Umgebungsdruckes liegt, entspannt, um am dritten Eingang 15 der Ejektorpumpe 3 einen Saugluftstromfluß zu erzeugen. Der Saugluftstrom der - oberhalb an den strömungskritischen Stellen der Außenhautstruktur des Flugzeuges - abgesaugten Grenzschicht strömt gemeinsam mit dem die Ejektorpumpe 3 antreibenden Trägerluftstrom zum der Lavaldüse nachgelagerten Diffusor. Beide vereinten Luftströme werden durch den Diffusor in den nichtdruckbeaufschlagten Bereich 11 des Flugzeuginnenbereiches abgegeben.

Eine strömungskritische Stelle für die Laminarhaltung der Grenzschicht oberhalb der Außenhautstruktur des Flugzeuges stellen die Vorderkanten der Tragflächen sowie des Höhen- und Seitenleitwerkes dar, an denen beispielgemäß die Grenzschicht zur Laminarhaltung der Strömung und damit zur Widerstandsverminderung abgesaugt wird. Mit der Erzielung der anliegenden Strömung oberhalb dieser Bereiche der Außenhautstruktur werden - zusätzlich der erzielten aerodynamischen Verbesserungen im Flugbetrieb - Einsparungen des Kraftstoffverbrauches eines Flugzeuges erreicht. Dabei entspricht der Saugluftstrom der abzusaugenden Luftmenge der Grenzschicht, die oberhalb der definitiv genannten kritischen Stellen der Außenhautstruktur des Flugzeuges strömt.

In Abhängigkeit der Anzahl und Lokalisierung der strömungskritischen Stellen zur Vermeidung der Ablösung der Grenzschicht auf der Außenhautstruktur wird ein Absauggeneratorsystem der-eingangs des Ausführungsbeispiels - angegebenen grundsätzlichen Art gebildet, mit dem beispielsweise oberhalb definierter Absaugstellen (Flugzeugflügel, Triebwerksgondeln, Leitwerk) die Grenzschicht abgesaugt wird.

Danach bilden mehrere Ejektorpumpen 3 ein Ejektorpumpensystem, das integraler Bestandteil des Absauggeneratorsystems ist. Mit jedem ersten Eingang 13 der installierten Ejektorpumpen 3 ist luftstrombezogen jeweils ein Rückschlagventil 2 verbunden. Letztere stehen mit einem ihnen zugeordneten Ausströmventil 1 in Verbindung, wodurch die luftstrombezogenen Verbindungen zur Druckkabine (zum druckbeaufschlagten Bereich 9 des Flugzeug-Druckrumpfes) realisiert werden.

Am jeweiligen zweiten Eingang 14 der Ejektorpumpen 3 sind - über entsprechende luftstrombezogene Verzweigungen 12 geführte - Verbindungen angeschlossen, die (über ein elektrisch oder elektronisch regelbares Absperrventilsystem) den ventilgesteuerten Druckluftstrom der triebwerksbezogenen Zapfluft zu den Ejektorpumpen 3 transportieren.

Am jeweiligen dritten Eingang 15 der Ejektorpumpen 3 sind die den Saugluftstrom der abgesaugten Grenzschichtströmung 10 führenden luftstrombezogene Verbindungen angeschlossen. Die Abgänge der jeweiligen Verzweigung 12 münden in eine luftstrombezogene Sammelverbindung, die mit der Klimaanlage des Flugzeuges verbunden ist.

Bei diesem beschriebenen Absauggeneratorsystem sitzen mehrere Ausströmventile 1 in den Öffnungen der Druck(trenn)wand 8, die den Innenbereich des Flugzeugrumpfes in einen druckbeaufschlagten und einen nichtdruckbeaufschlagten Bereich 9, 11 unterteilt. Die (dem nichtdruckbeaufschlagten Bereich 11 zugeordneten) Abgänge der Ausströmventile 1 sind luftstrombezogen an ihnen zugeordnete Rückschlagventile 2 angeschlossen, die abgangsseitig (in luftstrombezogener Durchflußrichtung) entweder direkt den ersten Eingängen 13 der Ejektorpumpen angeschlossen sind oder in eine Sammelleitung münden, welche dem ersten Eingang 13 der (einzeln installierten) Ejektorpumpe 3 angeschlossen ist. Falls auf die Installation der Ausströmventile 1 gänzlich verzichtet wird, werden die mit den Rückschlagventilen 2 verbundenen Luftstromleitungen in die (der Druckwand 8 ausgenommenen) Öffnungen eingepaßt. Dabei sitzen die den (jeweiligen) Rückschlagschlagventilen 2 angeschlossenen vorgeschalteten Luftstromverbindungen stramm in den Öffnungen der Druckwand 8. Die Druckwand 8 entspricht beispielgemäß der hinteren Druckkalotte des Flugzeug-Druckrumpfes. Alle luftstrombezogenen Verbindungen sind mittels Luftstromverbindungsleitungen, die als Rohrleitung und / oder als -kanal ausgeführt sind, realisiert. Die Wirkungsweise des Absauggeneratorsystems grundsätzlicher Art gleicht der vorbeschriebenen Funktion des Absauggeneratorsystems in Minimalausführung, wobei die der Ejektorpumpe 3 zugeführten Druckluftströme (zu deren mechanischen Antrieb) oder die an den unterschiedlichen Saugstellen absaugte Luft der Grenzschicht(strömung 10) über jeweils eine luftstrombezogene Sammelverbindungsleitung transportiert werden.

### Bezugszeichen

- 1: Ausströmventil
- 2: Rückschlagventil
- 3: Ejektorpumpe
- 4, 5: Absperrventil
- 6: Verzweigung, elektrisch
- 7: Steuereinheit, elektrisch oder elektronisch
- 8: Druckwand
- 9: druckbeaufschlagter Bereich (des Flugzeug-Druckrumpfes)
- 10: Grenzschichtströmung
- 11: nichtdruckbeaufschlagter Bereich (des Flugzeug-Innenbereiches)
- 12: Verzweigung, luftstrombezogen
- 13: erster Eingang (der Ejektorpumpe)
- 14: zweiter Eingang (der Ejektorpumpe)
- 15: dritter Eingang (der Ejektorpumpe)

## Patentansprüche

1. Flugzeug enthaltend ein Absauggeneratorsystem für die Laminarhaltung der Grenzschicht, mit wenigstens einer Ejektorpumpe (3), die durch einen ihr zugeführten Druckluftstrom angetrieben wird, wobei die Ejektorpumpe (3) die Luft der Grenzschichtströmung (10) an den oberhalb der Außenhautstruktur des Flugzeuges gelegenen strömungskritischen Stellen absaugt, die eine der Außenhautstruktur angeschlossene luftstrombezogene Verbindung ihr eingangsseitig zuleitet,
**dadurch gekennzeichnet,**
**daß** an der Ejektorpumpe (3) wenigstens drei luftstrombezogene Eingänge (13, 14, 15) liegen, daß ein Ausströmventil (1), das in der Öffnung einer Druckwand (8) sitzt, und ein Rückschlagventil (2) und ein erster Eingang (13) der Ejektorpumpe (3) luftstrombezogen in Reihe verbunden sind, wobei das Ausströmventil (1) infolge des im Reiseflug des Flugzeuges vorhandenen Differenzluftdruckes, der sich zwischen einem druckbeaufschlagten Bereich (9) des Flugzeug-Druckrumpfes und dem nichtdruckbeaufschlagten Bereich (11) des Flugzeug-Innenbereiches, die durch die Druckwand (8) bereichsweise getrennt sind, einstellt, die dem druckbeaufschlagten Bereich (9) des Flugzeug-Druckrumpfes abgeführte verdichtete Abluft als Druckluftstrom dem ersten Eingang (13) der Ejektorpumpe (3) zuführt, und daß ein zweiter Eingang (14) der Ejektorpumpe (3) luftstrombezogen mit einem ersten Absperrventil (5) verbunden ist, dem über eine luftstrombezogene Verzweigung (12) eine Verbindung zu mindestens einem Triebwerk geschaltet ist, weshalb im geöffneten Zustand des ersten Absperrventiles (5) dem zweiten Eingang (14) der Ejektorpumpe (3) wegen ermangelndem Differenzluftdruck zwischen dem druckbeaufschlagten und dem nichtdruckbeaufschlagten Bereich (9, 11) bei Bodennähe oder geringen Flughöhen im Start- und Landeflug des Flugzeuges triebwerksbezogene Zapfluft als Druckluft zugeführt wird, wobei an die Verzweigung (12), die dem ersten Absperrventil (5) zugeschalten ist, ein zweites Absperrventil (4) angeschlossen ist, das luftstrombezogen mit einer Klimaeinheit des Flugzeuges verbunden ist, welche die im geöffneten Zustand des zweiten Absperrventiles (4) erhaltene Zapfluft weiterverarbeitet und als aufbereitete Rezirkulationsluft dem Flugzeug-Druckrumpf retour zuführt.

2. Flugzeug nach Anspruch 1,
**dadurch gekennzeichnet, daß** die wahlweise und/oder in Abhängigkeit der Flughöhe dem ersten oder zweiten Eingang (13, 14) der Ejektorpumpe (3) zugeschalteten Druckluftströme die Ejektorpumpe (3) pneumatisch antreiben, und daß wenigstens eine Lavaldüse und ein Diffusor, der den Ausgang der Lavaldüse bildet, ein integraler luftstrombezogener Bestandteil der Ejektorpumpe (3) sind, wobei die dem ersten und /oder zweiten Eingang (13, 14) der Ejektorpumpe (3) zugeführte verdichtete Druckluft in der Lavaldüse auf einen Druck, der unterhalb des Umgebungsdruckes liegt, entspannt wird, um einen am dritten Eingang (15) der Ejektorpumpe (3) eintretenden Saugluftstromfluß der abzusaugenden Grenzschichtströmung (10) zu erzeugen, der gemeinsam mit dem die Ejektorpumpe (3) antreibenden Trägerdruckluftstrom zum der Lavaldüse nachgelagerten Diffusor strömt und durch letzteren in den nichtdruckbeaufschlagten Bereich (11) des Flugzeug-Innenbereiches abgegeben wird.

3. Flugzeug nach Anspruch 1,
**dadurch gekennzeichnet, daß** die bei den Absperrventile (4,5) über eine elektrische Verzweigung (6) mit einer elektrischen oder elektronischen Steuereinheit (7) verbunden sind, die sie in Abhängigkeit der Flughöhe des Flugzeuges ansteuert und deren Schaltzustand beeinflußt, und daß bei geöffnetem Schaltzustand des ersten Absperrventiles (5) das zweite Absperrventil (6) einen geschlossenen Schaltzustand einnimmt oder umgekehrt.

4. Flugzeug nach den Ansprüchen 3,
**dadurch gekennzeichnet, daß** bei geringer Flughöhe bis 6400 m (21000ft) die Steuereinheit (7) die beiden Absperrventile (4, (7) die beiden Absperrventile (4, so schaltet, daß das erste Absperrventil (5) geöffnet und das zweite Absperrventil (4)geschlossen ist, wonach infolge der Unterbrechung der Druckluftzufuhr zur Klimaeinheit der Druckluftstrom der triebwerksbezogenen Zapfluft dem zweiten Ejektorpumpeneintritt (14) der Ejektorpumpe (3) zuströmt und die Ejektorpumpe (3) mechanisch antreibt, so daß auch bei geringen Flughöhen ein Saugstromfluß der abgesaugten Grenzschichtströmung (10) einsetzt, wodurch an den Stellen der Absaugung oberhalb und nahe der Außenhautstruktur die Laminarhaltung der Grenzschichtströmung (10) beeinflußt wird.

5. Flugzeug nach den Ansprüchen 3,
**dadurch gekennzeichnet, daß** bei Flughöhe über 6400 m (21000ft) bis Reiseflughöhe bei 11887 m (39000 ft) die Steuereinheit (7) die beiden Absperrventile (4, 5) so schaltet, daß das erste Absperrventil (5) geschlossen und das zweite Absperrventil (4) geöffnet ist, wonach infolge der Unterbrechung der Druckluftzufuhr zum zweiten Ejektorpumpeneintritt (14) derEjektorpumpe(3) der Druckluftstrom der triebwerksbezogenen Zapfluft der Klimaeinheit zuströmt, und daß im Bereich dieser Flughöhen über 6400 m (2100 ft) bis Reiseflughöhe der über das Rückschlagventil (2) dem vorgeschalteten Ausströmventil (1) abgeführte Druckluftstrom dem ersten Ejektorpumpeneintritt eintritt und die Ejektorpumpe (3) pneumatisch antreibt, so daß bei Flughöhen im Reiseflug ein Saugstromfluß der abgesaugten Grenzschichtströmung (10) einsetzt, wodurch an den Stellen der Absaugung oberhalb und nahe der Außenhautstruktur die Laminarhaltung der Grenzschichtströmung (10) beeinflußt wird.

6. Flugzeug nach Anspruch 5,
**dadurch gekennzeichnet, daß** bei einem Betriebszustand, der durch ein nichtausreichendes Druckpotentials im Flugzeug-Druckrumpf, durch das sich der Differenzluftdruck im Reiseflug des Flugzeuges einstellt, charakterisiert ist, die Steuereinheit (7) das erste Absperrventil (5) öffnet, so daß dem zweiten Ejektorpumpeneintritt (14) zusätzlich ein Teil des Druckluftstromes der triebwerksbezogenen Zapfluft zuströmt, um die notwendige pneumatische Antriebsleistung für den Betrieb der Ejektorpumpe (3) zum Einsetzen des Saugstromfluß der abgesaugten Grenzschichtströmung (10) abzusichern.

7. Flugzeug nach Anspruch 1,
**dadurch gekennzeichnet, daß** mehrere Ausströmventile (1) in Öffnungen der Druckwand (8) sitzen, denen in Reihe geschaltet jeweils ein Rückschlagventil (2) nachgeordnet ist, die luftstrombezogen mit dem ersten Ejektorpumpeneintritt (13) der Ejektorpumpe (3) verbunden sind.

8. Flugzeug nach den Ansprüchen 7,
**dadurch gekennzeichnet, daß** das in der Öffnung der Druckwand (8) jeweils sitzende Ausströmventil (1) entfällt, und daß die jeweils den Rückschlagschlagventilen (2) angeschlossenen luftstrombezogenen vorgeschalteten Verbindungen in den Öffnungen der Druckwand (8) sitzen.

9. Flugzeug nach Anspruch 1,
**dadurch gekennzeichnet, daß** die Druckwand (8) luftstrombezogen der hinteren Druckkalotte des Flugzeug-Druckrumpfes entspricht.

10. Flugzeug nach den Ansprüchen 7 oder 8,
**dadurch gekennzeichnet, da**ß mehrere Ejektorpumpen (3) ein Ejektorpumpensystem bilden, das integraler Bestandteil des Absauggeneratorsystems ist, wobei an deren ersten Ejektorpumpeneintritt (13) die jeweils in Reihe geschaltenen Rückschlagventile (2) mit oder ohne jeweils nachgeschaltetem Ausströmventil (1) die luftstrombezogenen Verbindungen zum Flugzeug-Druckrumpf realisieren, und wobei an deren zweiten Ejektorpumpeneintritt (14) die den ventilgesteuerten Druckluftstrom der triebwerksbezogenen Zapfluft transportierenden luftstrombezogene Verbindungen angeschlossen sind, und wobei an deren dritten Ejektorpumpeneintritt (15) die den Saugstrom der abgesaugten Grenzschichtströmung (10) führenden luftstrombezogene Verbindungen angeschlossen sind.

## Claims

1. Aircraft embodying a suction generator system for keeping the boundary layer laminar, having at least one ejector pump (3) that is driven by a compressed-air stream fed through it, wherein the ejector pump (3) sucks off that air of the boundary-layer flow (10) at flow-critical points situated above the outer-skin structure of the aircraft that is fed to it on the input side by an air-flow connection connected to the outer-skin structure, **characterized in that** at least three air-flow inputs (13, 14, 15) are situated at the ejector pump (3), **in that** an emission valve (1) that is seated in the opening of a pressure wall (8), and a nonreturn valve (2) and a first input (13) of the ejector pump (3) are connected in series for airflow, wherein the emission valve (1) feeds, as a consequence of the differential air pressure that is present during the cruising flight of the aircraft and that is established between a pressurized region (9) of the aircraft pressure fuselage and the unpressurized region (11) of the aircraft interior region that are separated in places by the pressure wall (8), the compressed exhaust air removed from the pressurized region (9) of the aircraft pressure fuselage is fed as a compressed-airflow to the first input (13) of the ejector pump (3) and **in that** a second input (14) of the ejector pump (3) is connected for airflow to a first shutoff valve (5) to which a connection to at least one engine is made via an air-flow bifurcation, for which reason, in the opened state of the first shutoff valve (5), engine bleed air is fed as compressed air to the second input (14) of the ejector pump (3) owing to the lack of differential air pressure between the pressurized and the unpressurized regions (9, 11) in the vicinity of the ground or at low flying altitudes during take-off and landing of the aircraft, wherein there is connected to the bifurcation (12) connected to the first shutoff valve (5) a second shutoff valve (4) that is connected in terms of airflow to an air-conditioning unit of the aircraft, which unit processes the bleed air received in the opened state of the second shutoff valve (4 further and feeds it back as treated recirculation air to the aircraft pressure fuselage.

2. Aircraft according to Claim 1, **characterized in that** the compressed airflows connected optionally and/or as a function of flying altitude to the first or second inputs (13, 14) of the ejector pump (3) drive the ejector pump (3) pneumatically, and **in that** at least one Laval nozzle and a diffuser that forms the output of the Laval nozzle are an integral air-flow component of the ejector pump (3), wherein the compressed airflow fed to the first and/or second input (13, 14) of the ejector pump (3) is let down in the Laval nozzle to a pressure below the ambient pressure in order to generate a suction-airflow, occurring at the third input (15) of the ejector pump (3), of the boundary-layer flow (10) that is to be sucked off and that flows, together with the carrier-pressure airflow, driving the ejector pump (3), to the diffuser downstream of the Laval nozzle and is emitted through said diffuser into the unpressurized region (11) of the aircraft interior.

3. Aircraft according to Claim 1, **characterized in that** the two shutoff valves (4, 5) are connected via an electrical bifurcation (6) to an electrical or electronic control unit (7) that drives them as a function of the flying altitude of the aircraft and influences their switching state, and **in that**, in the opened switching state of the first shutoff valve (5), the second shutoff valve (6) assumes a closed switching state or vice versa.

4. Aircraft according to Claim 3, **characterized in that**, at low altitudes up to 6,400 m (21,000 ft), the control unit (7) switches the two shutoff valves (4, 5) in such a way that the first shutoff valve (5) is opened and the second shutoff valve (4) is closed, whereafter, as a consequence of the interruption of the compressed-air flow to the air conditioning unit, the compressed-air flow of the engine bleed air flows to the second ejector pump entrance (14) of the ejector pump (3) and mechanically drives the ejector pump (3) in such a way that, even at low altitudes, a suction-air flow of the sucked-off boundary-layer flow (10) sets in, as a result of which keeping the boundary-layer flow (10) laminar is influenced at the suction points above or near the outer-skin structure.

5. Aircraft according to Claim 3, **characterized in that**, at altitudes above 6,400 m (21,000 ft) up to cruising altitude at 11,887 m (39,000 ft), the control unit (7) switches the two shutoff valves (4, 5) in such a way that the first shutoff valve (5) is closed and the second shutoff valve (4) is opened, whereafter, as a consequence of the interruption of the compressed air feed to the second ejector pump entrance (14) of the ejector pump (3), the compressed-air flow of the engine bleed air flows to the air-conditioning unit, and **in that**, in the region of said altitudes above 6,400 m (21,000 ft) up to cruising altitude the compressed-air flow removed from the upstream emission valve (1) via the nonreturn valve (2) enters the first ejector pump entrance and drives the ejector pump (3) pneumatically so that, for altitudes in cruising flight, a suction-air flow of the sucked-off boundary-layer flow (10) sets in, as a result of which keeping the boundary-layer flow (10) laminar is influenced at suction points above and near the outer-skin structure.

6. Aircraft according to Claim 5, **characterized in that**, for an operating state that is **characterized by** an insufficient pressure potential in the aircraft pressure fuselage as a result of which the differential air pressure during the cruising flight of the aircraft is established, the control unit (7) opens the first shutoff valve (5) so that part of the pressurized-air flow of the engine bleed air additionally flows to the second ejector pump entrance (14) in order to safeguard the pneumatic drive power for the operation of the ejector pump (3) for the purpose of establishing the suction-air flow of the sucked-off boundary-layer flow (10).

7. Aircraft according to Claim 1, **characterized in that** a plurality of emission valves (1) are seated in openings in the pressure wall (8) downstream of each of which a nonreturn valve (2) is situated in series connection, which emission valves are connected in terms of airflow to the first ejector pump entrance (13) of the ejector pump (3).

8. Aircraft according to Claim 7, **characterized in that** the emission valve (1) seated in each case in the opening of the pressure wall (8) is omitted and **in that** the connections connected upstream of each of the nonreturn valves (2) in terms of airflow are seated in the openings of the pressure wall (8).

9. Aircraft according to Claim 1, **characterized in that** the pressure wall (8) corresponds in terms of airflow to the rear pressure dome of the aircraft pressure fuselage.

10. Aircraft according to Claim 7 or 8, **characterized in that** a plurality of ejector pumps (3) form an ejector pump system that is an integral component of the suction generator system, wherein, at their first ejector pump entrance (13), the nonreturn valves (2), each connected in series, form, with or without an emission valve (1) connected downstream in each case, the air-flow connections to the aircraft pressure fuselage, and wherein the air-flow connections transporting the valve-controlled compressed-flow air of the engine bleed air are connected to their second ejector pump entrance (19) and wherein the airflow connections carrying the suction stream of the sucked-off boundary layer flow (10) are connected to their third ejector pump entrance (15).

## Revendications

1. Avion comprenant un générateur d'aspiration de la couche limite, avec au moins une pompe d'éjection (3) activée par un courant d'air de pression dirigé vers elle, ladite pompe (3) aspirant l'air de la couche limite (10) aux emplacements critiques pour l'écoulement situés au-dessus de la structure de paroi externe de l'avion, l'air étant acheminé vers ladite structure, côté entrée, via une liaison de courant d'air raccordée à ladite structure,
**caractérisé en ce que** au moins trois entrées de courant d'air (13,14,15) sont situées contre la pompe d'éjection, **en ce que** une soupape d'écoulement (1) reposant dans l'ouverture d'une paroi de pression (8) et **en ce que** une soupape de retenue (2) et une première entrée (13) de la pompe d'éjection (3) sont raccordées en série en fonction du courant d'air. Suite au différentiel de pression d'air enregistré dans l'avion pendant le voyage et généré entre un segment (9) sous pression du fuselage pressurisé de l'avion et le segment non sollicité par pression (11) de la partie intérieure d'avion, les deux segments étant séparés par sections par l'intermédiaire de la paroi de pression (8), la soupape d'écoulement (1) achemine l'air d'échappement condensé évacué du segment sous pression (9) du fuselage pressurisé de l'avion vers la première entrée (13) de la pompe d'éjection (3), comme un courant d'air comprimé, et **en ce que** une deuxième entrée (14) de la pompe d'éjection (3) a été raccordée en fonction du courant d'air à une première soupape d'arrêt (5) à laquelle un raccordement à au moins un réacteur a été connecté via une ramification (12) de courant d'air, de l'air puisé étant ainsi acheminé comme air comprimé vers la deuxième entrée (14) de la pompe d'éjection (3), avec une première soupape d'arrêt (5) en position ouverte, à cause du différentiel de pression d'air insuffisant entre le segment sous pression et le segment non sollicité par pression (9, 11) près du sol ou à faible altitude lors du décollage et de l'atterrissage de l'avion, une deuxième soupape d'arrêt (4) ayant été raccordée à la ramification (12) raccordée à la première soupape d'arrêt (5), la deuxième soupape étant reliée par courant d'air à une installation de climatisation de l'avion qui, avec une deuxième soupape d'arrêt (4) en position ouverte, traite encore l'air puisé recueilli et le ré-achemine sous la forme d'un air de recirculation préparé vers le fuselage pressurisé de l'avion.

2. Avion conforme à la revendication 1,
**caractérisé en ce que** les courants d'air comprimé raccordés à la première ou à la deuxième entrée (13, 14) de la pompe d'éjection (3), arbitrairement et /ou en fonction de l'altitude de vol, activent la pompe d'éjection (3) de manière pneumatique, et **en ce que** au moins une tuyère de Laval et un diffuseur formant la sortie de la tuyère de Laval font partie intégrante de la pompe d'éjection (3), l'air comprimé condensé de la tuyère de Laval acheminé vers la première et / ou la deuxième entrée (13, 14) de la pompe d'éjection (3) étant détendu à une pression inférieure à la pression ambiante afin de produire un flux de courant d'air d'aspiration de la couche limite pénétrant au niveau de la troisième entrée (15) de la pompe d'éjection (3), ledit flux s'écoulant en même temps que le courant d'air primaire comprimé actionnant la pompe d'éjection (3) vers le diffuseur situé en aval de la tuyère de Laval et étant dégagé via cette tuyère dans le segment non sollicité par pression (11) de la partie intérieure de l'avion.

3. Avion conforme à la revendication 1,
**caractérisé en ce que** les deux soupapes d'arrêt (4, 5) sont raccordées via une ramification électrique (6) à une unité de commande électrique ou électronique qui les commande en fonction de l'altitude de vol de l'avion et qui influence leur position de commutation, et **en ce que**, avec une première soupape d'arrêt (5) en position de commutation ouverte, la deuxième soupape d'arrêt (6) adopte une position de commutation fermée, et inversement.

4. Avion selon la revendication 3,
**caractérisé en ce que**, à altitude de vol réduite à 6400 m (21000 pieds), l'unité de commande (7) commute les deux soupapes d'arrêt (4, 5) de telle sorte que la première soupape d'arrêt (5) soit ouverte et la deuxième (4) fermée, le courant d'air comprimé de l'air puisé par les réacteurs s'écoulant vers la deuxième entrée de la pompe d'éjection (3), suite à l'interruption de l'acheminement de l'air comprimé vers l'unité de climatisation, et activant mécaniquement ladite pompe (3) de telle sorte qu'un courant d'air d'aspiration de la couche limite (10) soit également généré à des altitudes de vol élevées, la couche limite (10) étant ainsi influencée aux emplacements d'aspiration situés au-dessus et à proximité de la structure de paroi externe.

5. Avion conforme à la revendication 3,
**caractérisé en ce que**, à une altitude de vol de plus de 6400 m (21000 pieds) et de 11887 m (39000 pieds) maximum, l'unité de commande (7) commute les deux soupapes d'arrêt (4, 5) de telle sorte que la première soupape (5) soit fermée et la deuxième (4) ouverte, le courant d'air comprimé de l'air puisé par les réacteurs s'écoule vers l'unité de climatisation, suite à l'interruption de l'acheminement de l'air comprimé vers la deuxième entrée (14) de la pompe d'éjection (3), et **en ce que**, à des altitudes allant de plus de 6400 m (21000 pieds) jusqu'à l'altitude de croisière, le courant d'air comprimé évacué de la soupape d'évacuation commutée en amont pénètre dans la première entrée de la pompe d'éjection et actionne la dite pompe(3) de façon pneumatique, de telle sorte que, à une altitude de croisière, un flux de courant d'air d'aspiration de la couche limite (10) est généré, ledit flux influençant la dite couche aux emplacements d'aspiration situés au-dessus et à proximité de la structure de paroi externe.

6. Avion conforme à la revendication 5,
**caractérisé en ce que**, en situation de fonctionnement **caractérisée par** un potentiel de pression insuffisant dans le fuselage pressurisé de l'avion, lequel provoque un différentiel de pression d'air pendant le vol de croisière de l'avion, l'unité de commande (7) ouvre la première soupape d'arrêt (5) de telle sorte qu'une partie du courant d'air comprimé de l'air puisé par les réacteurs s'écoule vers la deuxième entrée de la pompe d'éjection (14) afin de garantir la puissance de propulsion pneumatique nécessaire pour le fonctionnement de la pompe d'éjection (3) destiné à la production du courant d'air d'aspiration de la couche limite (10).

7. Avion conforme à la revendication 1,
**caractérisé en ce que** plusieurs soupapes d'évacuation (1) reposent dans des ouvertures de la paroi sous pression (8), une soupape d'arrêt (2) étant connectée en amont et en série à chaque soupape d'évacuation et les soupapes d'arrêts étant reliées à la première entrée de la pompe d'éjection (13), en fonction du courant d'air.

8. Avion conforme à la revendication 7,
**caractérisé en ce que** la soupape d'évacuation (1) reposant dans l'ouverture de la paroi sous pression (8) est supprimée, et **en ce que** les raccordements raccordés aux soupapes de retenue et commutés en amont en fonction du courant d'air reposent dans les ouvertures de la paroi sous pression (8).

9. Avion conforme à la revendication 1,
**caractérisé en ce que** la paroi sous pression (8) correspond, en fonction du courant d'air, à la calotte de pression postérieure du fuselage pressurisé de l'avion.

10. Avion selon les revendications 7 ou 8,
**caractérisé en ce que** plusieurs pompes d'éjection (3) forment un système de pompes d'éjection faisant lui-même partie intégrante du générateur d'aspiration, les soupapes de retenue commutées en série assurant, à leur première entrée de pompe d'éjection, des raccordements par courant d'air au fuselage pressuré de l'avion, avec ou sans soupape d'évacuation (I) connectée en amont, les liaisons par courant d'air transportant le courant d'air comprimé distribué par soupapes de l'air puisé par les réacteurs étant reliées à la deuxième entrée de pompe d'éjection des soupapes de retenue (2) et les liaisons par courant d'air guidant l'air d'aspiration de la couche limite (10 )étant raccordées à la troisième entrée de pompe d'éjection.
